# EUROPEAN PATENT SPECIFICATION

(11) **EP 4 282 605 B1**
(45) Date of publication and mention of the grant of the patent: **11.02.2026**
(21) Application number: 21921319.6
(22) Date of filing: 21.12.2021
(51) Int. Cl.: B27L 5/02

(54) **LONG CUTTING KNIFE**
LANGES SCHNEIDEMESSER
COUTEAU À LONGUE LAME

(30) Priority: 21.01.2021 JP 2021007889
(43) Date of publication of application: 29.11.2023
(73) Proprietor: Kanefusa Kabushiki Kaisha, Ohguchi-cho, Niwa-gun Aichi 480-0192 (JP)
(72) Inventor: NODA Hirokazu, Niwa-gun, Aichi 480-0192 (JP)
(74) Representative: Maikowski & Ninnemann Patentanwälte Partnerschaft mbB
(86) International application number: PCT/JP2021/047197
(87) International publication number: WO 2022/158218

(56) References cited:
- CN-A- 108 130 478
- FR-A1- 2 337 017
- JP-A- 2011 045 991
- JP-A- 2014 087 895
- JP-A- 2014 217 936
- JP-A- H 059 654
- JP-A- H11 147 207
- JP-A- H11 268 004
- JP-A- S49 117 317
- JP-A- S53 107 800
- JP-U- S6 333 902
- US-A1- 2011 030 526

## Description

### Technical Field

The present invention relates to a long knife used to cut a wood along an outer surface of the wood to obtain veneer, according to the preamble of independent claims 1 and 2. Such a long cutting knife is known from the document FR 2 337 017 A1.

### Background Art

A long cutting knife may be attached to wood veneer cutting machines or the like, such as a veneer rotary lathe and a veneer slicer. For example, they may be used to cut woods such as, for example, raw wood logs. According to Japanese Laid-Open patent publication No. S54-84698A, Japanese Laid-Open patent publication No. S52-80598A, and Japanese Laid-Open patent publication No. H11-147207A, a long cutting knife has a long cutting edge. A columnar wood is allowed to rotate about an axis. A cutting edge is oriented to face in a direction opposite to a rotation direction of the wood. The cutting edge is then moved relative to an outer surface of the rotating wood. The cutting edge cuts the outer surface of the wood in the form of a thinly sliced strip as the wood rotates (Katsuramuki). This results in obtaining a veneer that is long in a longitudinal direction along the direction of the cutting edge. A nose bar, which is allowed to contact the outer surface of the wood, is provided in front of the cutting edge in the cutting direction. By cutting with the nose bar in contact with the outer surface of the wood, cracks in the outer surface of the wood can be prevented and the outer surface of the wood can be cut to a predetermined thickness. Further, the long cutting knife is attached to a veneer slicer to thinly slice the wood.

When using a veneer rotary lathe, a blade metal having a cutting edge may be made of a material such as a high-strength alloy tool steel or high-speed tool steel. However, these high-strength steel materials are expensive. For example, a long cutting knife may be very expensive if it is entirely formed of the same steel material having the same strength as that of the blade metal. Long cutting knives described in JPS52-80598A and JPH11-147207A are configured of a blade metal having a cutting edge and a base metal, which is joined to the blade metal to support the blade metal. The base metal may be formed of, for example, inexpensive and easy-to-process soft steel. Further long cutting knives are disclosed in US 2011/030526 A1.

A columnar wood is subjected to a rounding process where an outer surface is cut to form a perfectly circular shape in a cross-section prior to actual peeling of the veneer. In recent years, the rounding process may be performed by cutting a great amount of the wood while the nose bar is separated from the outer surface of the wood. Before the rounding process, the outer surface of the wood has locally curved or bent portions, such as gnarls or knots. In the rounding process, the outer surface of the wood is cut at a high feed rate of, for example, 300m/min. Accordingly, the cutting edge is subjected to a heavy load when the cutting edge cuts the curved portions and the bent portions of the outer surface at high speed. At that time, the cutting edge of the long cutting knife may be plastically deformed and bent toward the side of the flank face of the cutting edge. A long cutting knife with a plastically deformed cutting edge is no longer able to cut wood well.

### Disclosure of the Invention

### Problem to be solved by the Invention

It has been difficult to sufficiently prevent plastic deformation of the cutting edges of conventional long cutting knives due to a heavy load. Although it is possible to increase the durability of long cutting knives by forming the entire cutting knife of the same material as the blade metal, this would be expensive. Therefore, there has long been a need for a long cutting knife that can favorably prevent the plastic deformation of the cutting edge while being produced at a relatively low cost.

### Means for solving the Problem

A claimed solution is specified by a long cutting knife according to claim 1 and by a long cutting knife according to claim 2. Dependent claims specify embodiments thereof. A long cutting knife may be used to cut a wood along an outer surface of the wood to obtain a veneer. The long cutting knife includes a blade metal having a cutting edge formed at a ridge between a rake face and a flank face. The long cutting knife further includes a base metal, to which a rear face of the blade metal is joined, the rear face being located on a side of the blade metal opposite to the rake face. The base metal is a quenched steel material, and the yield point of the steel material before quenching is 305 N/mm² or more.

Therefore, the steel material constituting the base metal has a wide stress range for elastic deformation. Consequently, the base metal may elastically deform even when heavy load is applied to the cutting edge during cutting. This allows the load applied to the cutting edge to be released and prevents the plastic deformation of the cutting edge suitably. The base metal may be formed of steel materials such as a carbon steel for machine structural use, which has a yield point of 305 N/mm² or more before quenching and is inexpensive, high tensile strength steel, and alloy steel for machine structural use. As a result, the long cutting knife may be produced at a relatively low cost.

According to one aspect of the present disclosure, the long cutting knife includes a blade metal having a cutting edge formed at a ridge between a rake face and a flank face. The long cutting knife further includes a base metal joined to a rear face of the blade metal, the rear face being located on the side of the blade metal opposite to the rake face. The base metal is a quenched steel material, and the yield point of the base metal is 390 N/mm² or more.

Therefore, the quenched steel is allowed to deform elastically against the load in a range that may occur when cutting the wood. The elastically deformed base metal thus can release the load applied to the cutting edge when a heavy load is applied to the cutting edge during cutting. This favorably prevents the plastic deformation of the cutting edge. The base metal is formed of a steel material, such as a carbon steel for machine structural use, a high tensile strength steel, or an alloy steel for machine structural use, those have a yield point of 390 N/mm² or more and are inexpensive. As a result, the long cutting knife may be produced at a relatively low cost.

The long cutting knife includes the blade metal having a cutting edge formed at a ridge between a rake face and a flank face. The long cutting knife further includes a base metal joined to a rear face of the blade metal, the rear face being located on the side of the blade metal opposite to the rake face. The base metal is a steel material, and the carbon content of the steel material is 0.32% or more. Here, the percentage refers to a percent by mass, and the below percentages will have essentially the same meaning.

Therefore, the steel material constituting the base metal is provided to have a hardness that can prevent the plastic deformation of the base metal when receiving the load in a range that may occur when cutting the wood. Preventing the plastic deformation of the base metal may prevent the heavy load from being applied only to the cutting edge of the long cutting knife. This favorably prevents the plastic deformation of the cutting edge. The base metal is formed of a steel material such as a carbon steel for machine structural use, which has the carbon content of 0.32% or more and is inexpensive. As a result, the long cutting knife may be produced at a relatively low cost.

According to another aspect of the present disclosure of the invention, the base metal includes a tip end face substantially flush with the flank face of the blade metal. According to the invention, the base metal further includes a base metal joining face, which is joined to the rear face of the blade metal. The support plate adjacent to the rear end of the blade metal is joined to the base metal joining face. Therefore, plastic deformation of the cutting edge can be prevented by using a base metal that is not easily plastically deformed. The blade metal includes cutting edge. A support plate is positioned adjacent to the blade metal at the rear end of the blade metal, the rear end being side of the blade metal opposite to the cutting edge. The blade metal and the support plate are joined to base metal joining faces. The blade metal is positioned in a suitable position relative to the base metal by being adjacent to the support plate. The long cutting knife can be produced at a further lower cost by making the support plate of, for example, an inexpensive soft steel.

### Brief Description of Drawings

FIG. 1 is a perspective view of a long cutting knife according to the present disclosure.
FIG. 2 is a side view of the long cutting knife.
FIG. 3 is a side view of the long cutting knife when wood is being subjected to a rounding process.
FIG. 4 is a table showing material characteristics of test pieces of base metals.
FIG. 5 is a perspective view schematically illustrating a test apparatus.
FIG. 6 is a table showing test results of the test pieces.

### Embodiments for carrying out the Invention

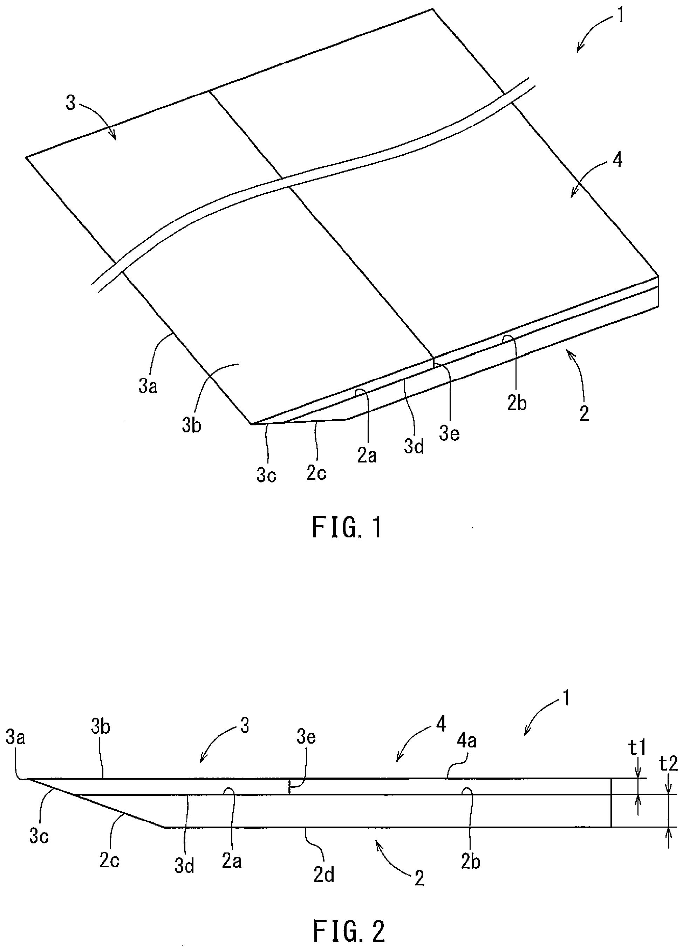

Hereinafter, one embodiment of the present disclosure will be described with reference to FIGS. 1 to 6. The same reference numerals in the description denote similar elements having similar functions. Accordingly, duplicative descriptions will not be provided. As shown in FIG. 1, a long cutting knife 1 has a base metal 2, a blade metal 3, and a support plate 4, each of which has a flat plate shape. The base metal 2, the blade metal 3, and the support plate 4 are joined together to form the long cutting knife 1. The blade metal 3 is formed of high-strength steel material, such as an alloy tool steel or high-speed tool steel. The support plate 4 is formed of an inexpensive and readily available steel material, such as a soft steel. A material of the base metal 2 will be described later in detail.

As shown in FIGS. 1 and 2, a tip end of the blade metal 3 is provided with a cutting edge 3a for cutting a cutting material. The cutting edge 3a is configured to linearly extend longer than an axial length of a columnar wood, which is a cutting material. The blade metal 3 has a rake face 3b and a flank face 3c, both of which are formed in a planar shape. The rake face 3b and the flank face 3c intersect at an acute angle, and an intersecting angle (edge angle) may be, for example, 20° to 24°. The cutting edge 3a is formed at a ridge/edge where the rake face 3b and the flank face 3c intersect. The blade metal 3 has a rear face 3d extending in parallel with the rake face 3b. The rear face 3d is positioned on a side (rear side) of the blade metal 3 opposite to the rake face 3b. The blade metal 3 has a flat plate shape with a thickness t1 as measured between the rake face 3b and the rear face 3d. The thickness t1 may be, for example, 7 mm or less, or, more preferably, 6 mm or less. The blade metal 3 has an abutment face 3e at a rear end. The abutment face 3e is located on a side of the blade metal 3 opposite to the cutting edge 3a. The abutment face 3e intersects substantially perpendicular to the rake face 3b and the rear face 3d. The support plate 4 is adjacent to and abutted to, and/or joined to, the abutment face 3e.

As shown in FIG. 2, the base metal 2 is formed into a flat plate shape having two parallel planes with an interval at a thickness of t2. The thickness t2 may be, for example, 9 to 13 mm. One of the two parallel planes serves as a base metal joining face 2a on which the blade metal 3 is configured to be joined, and serves as a base metal joining face 2b on which the support plate 4 is joined. Therefore, the base metal joining faces 2a, 2b are on the same plane. The base metal joining face 2a, which is the side where the cutting edge 3a is located, is located in front of the other base metal joining face 2b. A tip end face 2c is provided at a front end of the base metal 2. An angle at which the base metal joining face 2a and the tip end face 2c intersect is approximately the same as the angle at which the rake face 3b and the flank face 3c intersect. The tip end face 2c aligns substantially flush with the flank face 3c when the blade metal 3 is joined to the base metal 2.

As shown in FIG. 2, the support plate 4 is formed into a rectangular flat plate shape with substantially the same thickness t1 as the blade metal 3. Therefore, the rake face 3b aligns substantially flush with the surface of the support plate 4 when the blade metal 3 and the support plate 4 are joined to the base metal 2. A rear end of the support plate 4 aligns substantially flush with a rear end of the base metal 2 when the blade metal 3 and the support plate 4 are joined to the base metal 2. The base metal 2, the blade metal 3, and the support plate 4 are each formed by molding raw steel materials. Afterwards, three materials are temporarily fixed by welding or the like, and are then forged and quenched to increase their strength.

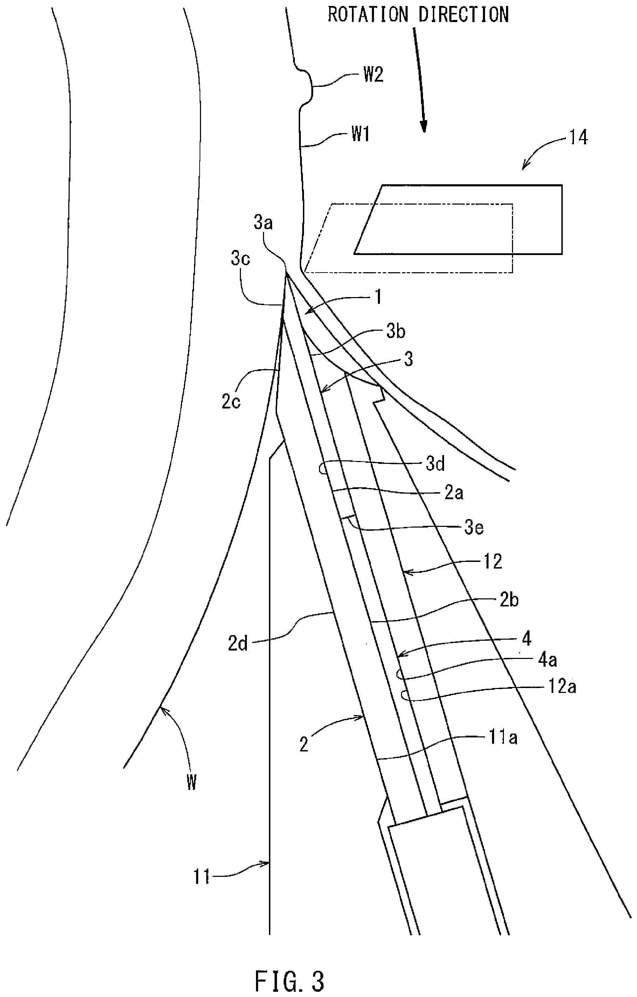

As shown in FIG. 3, the long cutting knife 1 is clamped and retained between a knife clamper 11 and a knife pad 12, with the cutting edge 3a projecting at the tip end. The knife clamper 11 includes a planar base metal abutting portion 11a. The base metal abutting portion 11a abuts the rear face 2d of the base metal 2, the rear face 2d being located on a side of the base metal 2 opposite to the base metal joining faces 2a, 2b. The knife pad 12 includes a planar cutting knife abutting portion 12a. The cutting knife abutting portion 12a abuts a rear part of the rake face 3b and the surface 4a of the support plate 4. The long cutting knife 1 is clamped between the base metal abutting portion 11a and the cutting knife abutting portion 12a. The long cutting knife 1 is retained between the knife clamper 11 and the knife pad 12, which are attached to a veneer processing machine body as the knife clamper 11 moves in a direction approaching the long cutting knife 1.

As shown in FIG. 3, the long cutting knife 1 is attached to the knife clamper 11 with the cutting edge 3a of the long cutting knife 1 oriented to a direction (upper direction in FIG. 3) opposite to a rotating direction of the columnar wood W. The rake face 3b is located radially outside of the wood W. The flank face 3c is located radially inside of the wood W with respect to the rake face 3b. The cutting edge 3a is allowed to approach or move away in a radial direction of the wood W relative to an outer surface W1 of the wood W. The cutting edge 3a and the outer surface W1 are brought relatively close to each other while rotating the wood W about its axis. This allows the cutting edge 3a to cut the outer surface W1.

As shown in FIG. 3, a nose bar 14 is provided in front of the cutting edge 3a in the cutting direction. The nose bar 14 is allowed to approach or move away in the radial direction and the rotating direction of the wood W relative to the outer surface W1 of the wood W. Allowing the nose bar 14 to approach the outer surface W1 as illustrated by a virtual line in FIG. 3, prevents the outer surface W1 from cracking, which is cut by the long cutting knife 1. Further, by allowing the nose bar 14 to approach relative to the outer surface W1, the outer surface W1 can be cut into a veneer at a predetermined peel thickness of, for example, 0.1 mm to 6.0 mm.

As shown in FIG. 3, the outer surface W1 of the wood W has a locally curved or bent portion, such as a knot W2, gnarl, or skin in a stage of the process prior to actual peeling with the long cutting knife 1. The wood W is subjected to a rounding process prior to the actual peeling, so as to remove the knot W2 or the like and to form the outer surface W1 into a perfect circular shape in cross section. During the rounding process, the cutting edge 3a deeply cuts into the outer surface W1, so as to peel thicker portion than the peel thickness during the actual peeling. The nose bar 14 is retracted into a position moved away from the outer surface W1, as illustrated by a solid line in FIG. 3, during the rounding process. In the rounding process, the outer surface W1 is fed at a high feed rate of, for example, 300 m/min., while being cut by the cutting edge 3a.

When the cutting edge 3a cuts the knot W2 shown in FIG. 3, the cutting edge 3a is subjected to a heavier-than-usual load. Since the blade metal 3 is formed of a high-strength steel material, it is barely, if at all, plastically deformed even when the heavy load is applied thereto. On the other hand, the base metal 2 is formed of a steel material having a lower strength than the blade metal 3. Therefore, due to the heavy load applied to the cutting edge 3a, an area of the base metal 2, particularly around the tip end face 2c, may be plastically deformed. When the area around the tip end face 2c is plastically deformed, the cutting edge 3a is bent to the side of the flank face 3c, thereby making cutting of the wood W difficult.

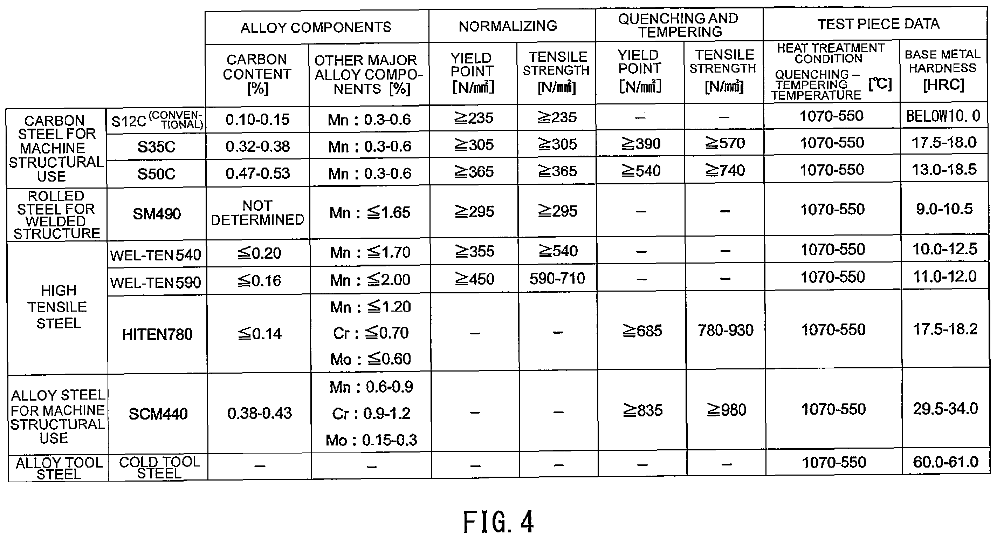

Inventors conducted comparative tests on various steel materials to obtain suitable materials to be used as the base metal 2 so as to prevent plastic deformation during the rounding process. FIG. 4 shows material characteristics of test pieces used in the tests. Base metals 2 made of S12C, S35C, S50C were prepared as test pieces of carbon steel for machine structural use. S12C has conventionally been used as a material for the base metal. A base metal 2 made of SM490 was prepared as a test piece of a rolled steel for a welded structure. Base metals 2 made of steel materials respectively referred to as WEL-TEN 540, WEL-TEN 590, HITEN 780 were prepared as test pieces of high tensile strength steels. A base metal 2 made of SCM440 was prepared as a test piece of an alloy steel for machine structural use (e.g., a chrome molybdenum steel). In addition, a solid material was prepared as a reference test piece, in which the long cutting knife 1 is entirely formed of the same alloy tool steel, referred to as a cold tool steel used as a material, used for the blade metal 3.

The blade metal 3 of each of the test pieces, except for the solid material test piece, is made of an alloy tool steel called cold tool steel. The base metal 2, the blade metal 3, and the support plate 4 of each of the test pieces was formed by tempering. The long cutting knifes 1 of the test pieces were formed to have a thickness of 16 mm, a width in an extending direction of the rake face 3b of 180 mm, and a length in an extending direction of the cutting edge 3a of 20 mm. The blade metal 3 was formed with a thickness t1 (see FIG. 3) of 5 mm. The edge angle, at which the rake face 3b and the flank face 3c intersect, was 20°.

The yield point and tensile strength of normalizing, shown in FIG. 4, show material characteristics before quenching the test pieces. The yield point and tensile strength of quenching and the tempering show material characteristics after quenching the test pieces. In the quenching - tempering temperature [°C] of the heat treatment condition, the left numerical values represent quenching temperatures and the right numerical values represent tempering temperatures. The base metal hardness [HRC] represents the Rockwell Hardness when conducting a Rockwell Hardness Test on the base metal 2 for each of the test pieces.

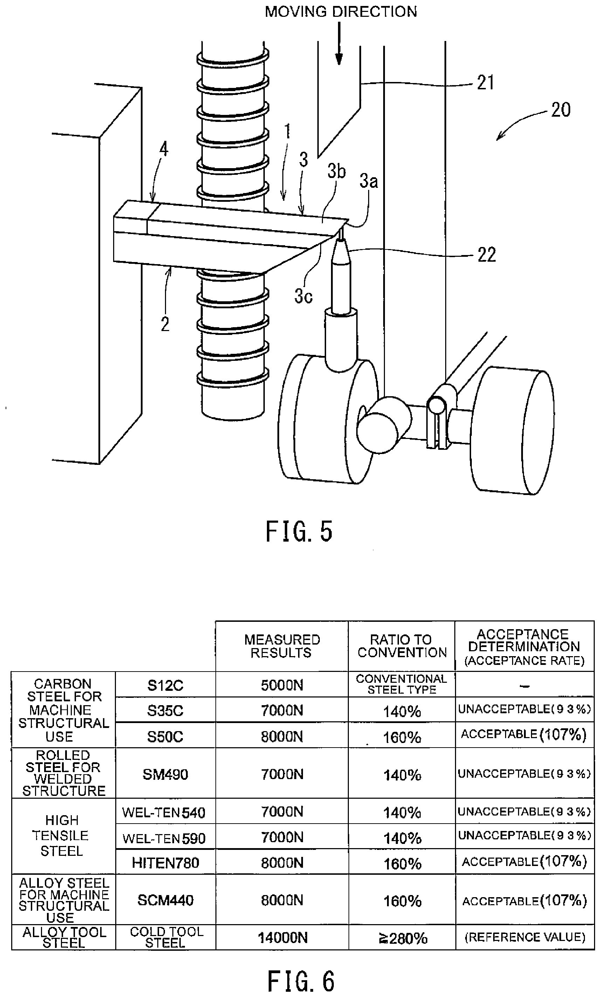

As shown in FIG. 5, a load was applied to the cutting edge 3a of the long cutting knife 1 of each of the test pieces to measure the load [N] at a time when the cutting edge 3a yields. These tests were performed using an Amsler test machine 20. Three samples were tested for each type of test piece and the average value of each sample was determined. An indenter 21 to apply pressure to the test items may be, for example, a thin plate. The indenter 21 has a length of 20 mm linearly in the extending direction of the cutting edge 3a, which is the same as that of the test item. The entire length of the indenter 21 is in line-contact with the rake face 3b at a position 10 mm from the cutting edge 3a. The indenter 21 applies pressure to the long cutting knife 1 from the side of the rake face 3b toward the side of the flank face 3c (downward in FIG. 5). A dial gauge 22 is brought into contact with the flank face 3c of the test piece to measure an amount of strain, which is then used to determine the timing when the test piece yields. The indenter 21 applied pressure to the test pieces at a feed rate of 2mm/min. Starting at a load of 3000N, the load was increased at intervals of 1000N until when the test piece first plastically deformed. Measured values of three samples were averaged to serve as a measured result.

As shown in FIG. 6, 150% of a ratio to convention of a measured result (5000N) of the test piece of S12C, which is a conventional type of steel, was used as a threshold value of a determination criteria. The steel types that plastically deformed at 7500N or more, which is greater than or equal to the threshold value, were determined to be acceptable. The steel types plastically deformed at less than 7500N, which is lower than the threshold value, were determined to be unacceptable.

As shown in FIG. 6, test items that included a base metal 2 made of a carbon steel for machine structural use S50C, a high tensile strength steel HITEN780, or an alloy steel for machine structural use SCM440 were determined to be acceptable. Test items that included a base metal 2 made of a carbon steel for machine structural use S35C, a rolled steel for welded structure SM490, or high tensile strength steels WEL-TEN 540, WEL-TEN 590 were determined to be unacceptable. The acceptable steel types elastically deform up to 160% of the load with respect to the ratio to convention. The unacceptable steel types elastically deform up to 140% of the load with respect to the ratio to convention. Therefore, the range of the elastic deformation of the unacceptable steel types is relatively close in magnitude to the range of the elastic deformation of the acceptable steel types. In the case of the solid material, the test piece deformed elastically up to 280% of the load that is nearly three times greater than the conventional load. However, this solid material test piece was used as a reference value since the long cutting knife 1 would be very expensive to produce.

As shown in FIGS. 4 and 6, steel types determined as acceptable, such as S50C and SCM440, tend to have a high carbon content of 0.38% or more. On the other hand, even if the carbon content was 0.14% or less, such as in the case of HITEN 780, it was determined to have acceptable properties.

As shown in FIGS. 4 and 6, as for the yield point [N/mm²] before quenching and the force [N] that resulted in the plastic deformation measured in the tests, the higher the yield point was, the greater the force needed for plastic deformation. This tended to be for the carbon steels for machine structural use and for the rolled steel for welded structure. On the other hand, for high tensile strength steels, although the yield point was higher than that of S50C, the force needed for plastic deformation during testing was smaller than that of the test piece having S50C. As for the yield point [N/mm²] after quenching and the force [N] needed to plastic deformation measured during the test, the higher the yield point was, the greater the force during the plastic deformation was for all steel types, such as carbon steel for machine structural use, high tensile strength steel, and alloy steel for machine structural use.

As shown in FIGS. 4 and 6, as for the relevance between the base metal hardness [HRC] of each test piece and the force [N] needed for plastic deformation measured during the testing, the greater the base metal hardness was, the greater the force needed for plastic deformation, except for S35C. Although the test item having S35C has substantially the same base metal hardness as that of the test item having HITEN 780, the test item having S35C was determined to be unacceptable during testing.

Determination criteria for steel materials suitable as materials for the base metal 2 (see FIG. 1) are set taking the determined results in the above-mentioned test and material characteristics of each test piece into account. The steel types determined to be acceptable may be considered to be suitable as the materials of the base metal 2. Therefore, a steel material having a value equivalent to or higher than that of the material characteristics of S50C, which is a carbon steel for machine structural use, is suitable as a material for the base metal 2. More specifically, a steel material with a yield point of 365 N/mm² or more before quenching is suitable as a material for the base metal 2. Alternatively, a steel material with the yield point of the base metal of 540 N/mm² or more after quenching is suitable as a material for the base metal 2. Alternatively, a steel material having carbon content of 0.47% or more is suitable as a material for the base metal 2.

The difference between the elastic deformation range of the acceptable steel types (which were measured at 160% with respect to the ratio to convention during testing) and the elastic deformation range of the unacceptable steel types (which were measured at 140% with respect to the ratio to convention during testing) is smaller than the difference between the elastic deformation range of the unacceptable steel types and the elastic deformation range of the conventional steel types. Therefore, the previously determined unacceptable steel types are also considered to be relatively suitable as the material for the base metal 2. As such, the material characteristics of the carbon steel for machine structural use using S35C can be set as the lower limit of the determination criteria of the steel material suitable as a material for the base metal 2. Specifically, a yield point of 305 N/mm² before quenching, a yield point of the base metal of 390 N/mm², or a carbon content of 0.32% can be set as the lower limit values of the steel material suitable as a material for the base metal 2.

As described-above, a long cutting knife 1 is used to obtain a veneer by cutting along the outer surface W1 of the wood W, as shown in FIG. 3. The long cutting knife 1 includes a blade metal 3 having a cutting edge 3a formed at the ridge between a rake face 3b and a flank face 30. The long cutting knife 1 further includes a base metal 2 joined to the rear face 3d of the blade metal 3 so as to be located on a side of the blade metal 3 opposite to the rake face 3b. The base metal 2 is a quenched steel material, and the yield point of the steel material before quenching is 305 N/mm² or more.

Therefore, the steel material constituting the base metal 2 has a wide stress range for elastic deformation. Consequently, the base metal 2 may elastically deform even when heavy load is applied to the cutting edge 3a during cutting. This allows the load applied to the cutting edge 3a to be released and to favorably prevent the plastic deformation of the cutting edge 3a. The base metal 2 is formed of a steel material, such as a carbon steel for machine structural use, such as S35C, a high tensile strength steel, or an alloy steel for machine structural use, those has a yield point of 305 N/mm² or more before quenching and is inexpensive. As a result, the long cutting knife 1 may be produced at a relatively low cost.

As shown in FIG. 3, the long cutting knife 1 includes a blade metal 3 having a cutting edge 3a formed at the ridge between the rake face 3b and the flank face 3c. The long cutting knife 1 further includes the base metal 2 to which the rear face 3d of the blade metal 3 located on the side opposite the side to which the rake face 3b is joined. The base metal 2 is a quenched steel material, and the yield point of the base metal after quenching is 390 N/mm² or more.

Therefore, the quenched steel is allowed to deform elastically against a range of the load that may occur when cutting the wood W. The elastically deformed base metal 2 can thus release the load applied to the cutting edge 3a when a heavy load is applied to the cutting edge 3a during cutting. This favorably prevents the plastic deformation of the cutting edge 3a. The base metal 2 is formed of a steel material, such as a carbon steel for machine structural use such as S50C, a high tensile strength steel, or an alloy steel for machine structural use, those have a yield point of 390 N/mm² or more and is inexpensive. As a result, the long cutting knife 1 may be produced at a relatively low cost.

As shown in FIG. 3, the long cutting knife 1 includes a blade metal 3 having a cutting edge 3a formed at the ridge between the rake face 3b and the flank face 3c. The long cutting knife 1 further includes a base metal 2 joined to the rear face 3d of the blade metal 3 located on the side of the base blade metal 3 opposite to the side of the rake face 3b. The base metal 2 is a steel material, and the carbon content of the steel material is 0.32% or more.

Therefore, the steel material constituting the base metal 2 is provided with a hardness that can prevent plastic deformation within a range of the load that may occur when cutting the wood W. Preventing the plastic deformation of the base metal 2 may prevent the heavy load from being applied to the cutting edge of the long cutting knife 1. This favorably prevents the plastic deformation of the cutting edge 3a. The base metal 2 is formed of a steel material, such as a carbon steel for machine structural use, such as S35C, which has a carbon content of 0.32% or more and is inexpensive. As a result, the long cutting knife 1 may be produced at a relatively low cost.

As shown in FIG. 2, the tip end face 2c of the base metal 2 is substantially flush with the flank face 3c of the blade metal 3. The base metal 2 further includes a base metal joining face 2a, which is joined to the rear face 3d of the blade metal 3, and a base metal joining face 2b substantially flush with the base metal joining face 2a. A support plate 4, which is, according to the invention adjacent to the abutment face 3e at the rear end of the blade metal 3, is joined to the base metal joining face 2b. Therefore, the plastic deformation of the cutting edge can be prevented by using the base metal 2, which is not easily plastically deformed. The blade metal 3 having the cutting edge and the support plate 4 adjacent to the blade metal 3 on the abutment face 3e at the rear end of the blade metal 3, which is the side opposite to the cutting edge, are joined to the base metal joining faces 2a, 2b of the base metal 2, according to the invention. The blade metal 3 is positioned in a suitable position to the base metal 2 by being adjacent to the support plate 4. The long cutting knife 1 can be produced at a further lower cost by making the support plate 4, for example, of an inexpensive soft steel.

Various changes may be made to the long cutting knife 1 according to the present embodiments as described above. The long cutting knife 1 shall not be limited to being attached to the illustrated veneer rotary lathe, but may instead be applied to be attached to a wood veneer cutting machine, such as, for example, a veneer slicer. The thickness t1 of the blade metal 3 and the thickness t2 of the base metal shall not be limited to the illustrated ranges, but may be changed appropriately. An edge angle at which the rake face 3b and the flank face 3c intersect may be 20° or less, that is smaller than the illustrated ranges, or may also be 20° or more, that is greater than the illustrated ranges. Steel types of the base metal 2 shall not limited to the steel types measured with the test items. For example, a high-carbon chromium bearing steel having higher material characteristics than the yield point before quenching, yield point after quenching, or carbon content of the carbon steel for machine structural use S35C and is inexpensive may be used as a material for the base metal 2.

## Claims

1. A long cutting knife (1) used to cut a wood along an outer surface of the wood to obtain a veneer, comprising:
a blade metal (3) having a cutting edge (3a) formed at a ridge between a rake face (3b) and a flank face (3c); and
a base metal (2) to which a rear face (3d) of the blade metal (3) located on a side opposite to the rake face (3b) is joined, wherein the base metal (2) having a base metal joining face (2b) to be joined to the rear face (3d) of the blade metal (3),
**characterized in that**
the long cutting knife (1) further comprises a support plate (4) joined to the base metal joining face (2b),
the support plate (4) is adjacent to an abutment end (3e) of the blade metal (3) located on a side opposite to the cutting edge (3a), and
the base metal (2) is a quenched steel material, and the yield point of the base metal is 390 N/mm² or more.

2. Along cutting knife (1) used to cut a wood along an outer surface of the wood to obtain a veneer, comprising:
a blade metal (3) having a cutting edge (3a) formed at a ridge between a rake face (3b) and a flank face (3c); and
a base metal (2) to which a rear face of the blade metal (3) located on a side opposite to the rake face (3b) is joined, wherein the base metal (2) having a base metal joining face (2b) to be joined to the rear face of the blade metal (3),
**characterized in that**
the long cutting knife (1) further comprises a support plate (4) joined to the base metal joining face (2b),
the support plate (4) is adjacent to an abutment end (3e) of the blade metal (3) located on a side opposite to the cutting edge (3a), and
the base metal (2) is a steel material, and a carbon content of the steel material is 0.32% or more.

3. The long cutting knife (1) according to claim 1 or 2, wherein:
the base metal (2) includes a tip end face (2c) substantially flush with the flank face (3c) of the blade metal (3), and
the rake face (3b) of the blade metal (3) aligns substantially flush with a surface (4a) of the support plate (4).

4. The long cutting knife (1) according to any one of claims 1 to 3, wherein
the support plate (4) is formed of soft steel.

## Patentansprüche

1. Langes Schneidmesser (1), das zum Schneiden eines Holzes entlang einer äußeren Oberfläche des Holzes verwendet wird, um ein Furnier zu erhalten, umfassend:
ein Klingenmetall (3) mit einer Schneidkante (3a), die an einem Grat zwischen einer Spanfläche (3b) und einer Freifläche (3c) gebildet ist; und
ein Basismetall (2), mit dem eine sich auf einer der Spanfläche (3b) gegenüberliegenden Seite befindliche Rückfläche (3d) des Klingenmetalls (3) verbunden ist, wobei das Basismetall (2) eine Basismetallverbindungsfläche (2b) zum Verbinden mit der Rückfläche (3d) des Klingenmetalls (3) aufweist,
**dadurch gekennzeichnet, dass**
das lange Schneidmesser (1) ferner eine Stützplatte (4) umfasst, die mit der Basismetallverbindungsfläche (2b) verbunden ist,
die Stützplatte (4) einem auf einer der Schneidkante (3a) gegenüberliegenden Seite befindlichen Stoßende (3e) des Klingenmetalls (3) benachbart ist und
das Basismetall (2) ein vergütetes Stahlmaterial ist und die Streckgrenze des Basismetalls 390 N/mm² oder mehr beträgt.

2. Langes Schneidmesser (1), das zum Schneiden eines Holzes entlang einer äußeren Oberfläche des Holzes verwendet wird, um ein Furnier zu erhalten, umfassend:
ein Klingenmetall (3) mit einer Schneidkante (3a), die an einem Grat zwischen einer Spanfläche (3b) und einer Freifläche (3c) gebildet ist; und
ein Basismetall (2), mit dem eine sich auf einer der Spanfläche (3b) gegenüberliegenden Seite befindliche Rückfläche des Klingenmetalls (3) verbunden ist, wobei das Basismetall (2) eine Basismetallverbindungsfläche (2b) zum Verbinden mit der Rückfläche des Klingenmetalls (3) aufweist,
**dadurch gekennzeichnet, dass**
das lange Schneidmesser (1) ferner eine Stützplatte (4) umfasst, die mit der Basismetallverbindungsfläche (2b) verbunden ist,
die Stützplatte (4) einem auf einer der Schneidkante (3a) gegenüberliegenden Seite befindlichen Stoßende (3e) des Klingenmetalls (3) benachbart ist und
das Basismetall (2) ein Stahlmaterial ist und ein Kohlenstoffgehalt des Stahlmaterials 0,32 % oder mehr beträgt.

3. Langes Schneidmesser (1) nach Anspruch 1 oder 2, wobei:
das Basismetall (2) eine im Wesentlichen mit der Freifläche (3c) des Klingenmetalls (3) bündige Spitzenendefläche (2c) beinhaltet und
die Spanfläche (3b) des Klingenmetalls (3) im Wesentlichen bündig mit einer Oberfläche (4a) der Stützplatte (4) fluchtet.

4. Langes Schneidmesser (1) nach einem der Ansprüche 1 bis 3, wobei die Stützplatte aus Weichstahl gebildet ist.

## Revendications

1. Long couteau de coupe (1) utilisé pour couper un bois le long d'une surface extérieure du bois pour obtenir un placage, comprenant :
un métal de lame (3) présentant un bord tranchant (3a) formé sur une arête entre une face de dépouille (3b) et une face de flanc (3c) ; et
un métal de base (2) auquel une face arrière (3d) du métal de lame (3) situé sur un côté opposé à la face de dépouille (3b) est jointe, dans lequel le métal de base (2) présente une face de jonction de métal de base (2b) à être jointe à la face arrière (3d) du métal de lame (3),
**caractérisé en ce que**
le long couteau de coupe (1) comprend en outre une plaque de support (4) jointe à la face de jonction de métal de base (2b),
la plaque de support (4) est adjacente à une extrémité de butée (3e) du métal de lame (3) situé sur un côté opposé au bord tranchant (3a), et
le métal de base (2) est un matériau en acier trempé, et la limite d'élasticité du métal de base est de 390 N/mm² ou plus.

2. Long couteau de coupe (1) utilisé pour couper un bois le long d'une surface extérieure du bois pour obtenir un placage, comprenant :
un métal de lame (3) présentant un bord tranchant (3a) formé sur une arête entre une face de dépouille (3b) et une face de flanc (3c) ; et
un métal de base (2) auquel une face arrière du métal de lame (3) situé sur un côté opposé à la face de dépouille (3b) est jointe, dans lequel le métal de base (2) présente une face de jonction de métal de base (2b) à être jointe à la face arrière du métal de lame (3),
**caractérisé en ce que**
le long couteau de coupe (1) comprend en outre une plaque de support (4) jointe à la face de jonction de métal de base (2b),
la plaque de support (4) est adjacente à une extrémité de butée (3e) du métal de lame (3) situé sur un côté opposé au bord tranchant (3a), et
le métal de base (2) est un matériau en acier, et une teneur en carbone du matériau en acier est de 0,32 % ou plus.

3. Long couteau de coupe (1) selon la revendication 1 ou 2, dans lequel :
le métal de base (2) comporte une face d'extrémité de pointe (2c) sensiblement en affleurement avec la face de flanc (3c) du métal de lame (3), et
la face de dépouille (3b) du métal de lame (3) s'aligne sensiblement en affleurement avec une surface (4a) de la plaque de support (4).

4. Long couteau de coupe (1) selon l'une quelconque des revendications 1 à 3, dans lequel
la plaque de support (4) est formée d'acier doux.
